# EUROPEAN PATENT SPECIFICATION

(11) **EP 4 181 386 B1**
(45) Date of publication and mention of the grant of the patent: **07.10.2026**
(21) Application number: 21912986.3
(22) Date of filing: 02.07.2021
(51) Int. Cl.: H02P 6/12, H02P 6/16, G01D 5/14, H02P 29/024

(54) **METHOD FOR IMPLEMENTING BRUSHLESS DIRECT CURRENT MOTOR HALL POSITION SENSOR FAULT PROCESSING**
VERFAHREN ZUR IMPLEMENTIERUNG DER FEHLERVERARBEITUNG EINES HALLSENSORS EINES BÜRSTENLOSEN GLEICHSTROMMOTORS
PROCÉDÉ DE MISE EN OEUVRE D'UN TRAITEMENT DE DÉFAUT DE CAPTEUR DE POSITION À EFFET HALL DE MOTEUR À COURANT CONTINU SANS BALAI

(30) Priority: 30.12.2020 CN 202011609195
(43) Date of publication of application: 17.05.2023
(73) Proprietor: CRM ICBG (WUXI) CO., LTD., Wuxi, Jiangsu 214135 (CN)
(72) Inventor: WANG, Sang, Wuxi, Jiangsu 214135 (CN); ZHAO, Xudong, Wuxi, Jiangsu 214135 (CN); ZHANG, Zhengrui, Wuxi, Jiangsu 214135 (CN)
(74) Representative: Canzler & Bergmeier Patentanwälte Partnerschaft mbB
(86) International application number: PCT/CN2021/104247
(87) International publication number: WO 2022/142232

(56) References cited:
- EP-A1- 3 644 495
- CN-A- 103 472 263
- CN-A- 104 167 979
- CN-A- 108 322 106
- CN-A- 109 194 206
- CN-A- 109 905 058
- CN-A- 111 817 616
- US-A1- 2020 186 060

## Description

### FIELD OF DISCLOSURE

The present invention relates to the field of motor control, particularly to the field of motor fault processing, and specifically to a method for fault processing of HALL position sensor in brushless direct current motor.

### DESCRIPTION OF RELATED ARTS

When a fault occurs to a HALL sensor, the HALL sensor will remain at a high-level state or a low-level state without changing with the rotor position. For BLDC motor (brushless direct current motor), single HALL fault will cause the commutation sector change from the original six state to four state, and double HALL faults will cause the commutation sector change from six state to two state.

In the conventional technology, the following methods are used to realize fault processing:
1. Employing a rotor position observer, comparing the observation result with the output of a HALL sensor, and using the difference between the above two to detect faults of the sensor. After the faults are detected, the output of the observer is used as a feedback of the rotor position to realize fault-tolerant control. This method is more complicated for square wave control and needs to introduce a hardware peripheral.
**2.** Establishing a time confidence interval from the last commutation to the next commutation according to a previous motor running speed. If it is found that the commutation time between the last commutation and the next commutation is not within the time confidence interval, then doubling the confidence interval. If the commutation time between the last commutation and the next commutation is not yet within the doubled time confidence interval, then the HALL is determined to be faulty. The commutation time is given according to the timer value of the HALL phase that is currently confirmed to have no fault.

CN 109194206 A discloses a brushless DC motor fault-tolerant control method. During motor operation, the Hall sensor output is monitored in real-time. Based on the Hall output values, single-phase, two-phase, or three-phase Hall element faults are identified. In the case of a three-phase fault, the traditional three-stage start-up is directly used to switch from zero speed to the motor's closed-loop state. Through back-EMF zero-crossing detection, rotor position and speed are determined to ensure normal motor operation. For single-phase or two-phase Hall element faults, the motor speed is calculated using an average speed algorithm, and the commutation time is estimated based on the speed. This method effectively resolves the issue of motor malfunction caused by Hall position sensor failures.

CN 104167979 A discloses a self-repair method for Hall sensors in brushless DC motors. The method detects the Hall sensors in real time and estimates signals during fault periods for commutation. This eliminates performance impacts on the motor after fault detection. Upon confirming a fault, the system switches to a fault operation mode, solving issues caused by sudden Hall sensor failures. Unaffected Hall sensor signals are used to repair faulty signals, ensuring normal motor operation during faults. This enhances system stability and safety. The invention enables fault detection, diagnosis, and repair of Hall sensors during motor operation.

### SUMMARY OF THE PRESENT INVENTION

The purpose of the present invention is to overcome the above-mentioned shortcomings of the prior art and to provide a method for fault processing of HALL position sensor in brushless direct current motor, which meets the requirements of accurate data, minor error, and wide application.

The method for fault processing of HALL position sensor in brushless direct current motor is as follows:
the method for fault processing of HALL position sensor in brushless direct current motor includes:
step (1) presetting the forward and reverse rotation of the motor in advance, detecting HALL signals by an edge detection, and recording the number of edge hopping;
step (2) determining whether the absolute value of a difference between a rotor position change represented by HALL and an angle value calculated internally by MCU is within a preset error range; if so, updating the angle value to the angle representing the rotor position that is detected by HALL, otherwise, increasing the angle value according to an angle increment previously calculated through a motor rotation speed;
step (3) obtaining an acceptable range based on an original value of the previous angle increment; wherein the motor comprises an error register group comprising a plurality of error registers, wherein the outputs of the error registers are all connected to a plurality of AND-OR gates to correspond to different rotor position angles when a commutation occurs respectively; wherein the configuration range of the error registers is within 0° to 60°.

In an embodiment, the step (1) includes the following steps:
step (1.1) detecting the order of the HALL signal changes, and prompting a fault occurs;
step (1.2) determining whether the edge hopping occurs; if the edge hopping occurs, recording the number of the edge hopping in each electrical cycle and continuing with step (1.3); otherwise, if no edge hopping occurs, indicating all three HALL have faults;
step (1.3) recording the number of the edge hopping of round_x+1 after each HALL going through a rising edge and a falling edge, where x represents A, B, and C phase respectively; subtracting round_x from the maximum value of round_a, round_ B, and round_c of each edge hopping respectively, and if the result is greater than 1, indicating the HALL has faults ; otherwise, indicating no fault occurs.

In an embodiment, the step (3) includes the following steps:
step (3.1) obtaining the acceptable range of the angle increment based on the original value of the previous angle increment and an error angle set by a register in a commutation hardware circuit;
step (3.2) determining whether a difference between the angle value calculated internally by MCU and the angle corresponding to HALL is within the acceptable range when the HALL edge hopping occurs; if so, the angle value is updated to the angle corresponding to HALL, otherwise, the angle value is not updated.

In an embodiment, the method further includes a step of commutation, specifically including the following step:
performing the commutation when the angle values calculated internally by MCU are 30°, 90°, 150°, 210°, 270°, or 330°.

In an embodiment, the motor includes an angle recorder to record angles, and a commutation of the motor is performed according to the value of the angle recorder.

The method for fault processing of HALL position sensor in brushless direct current motor in the present invention is a method based on hardware detection, in which the repetitive detection work can be completed by the hardware, and the timely commutation can be ensured for the motor control users. The present invention provides the internal degree to record the angle, and the motor commutation is accomplished according to the degree angle value recorded by the internal degree. Therefore, compared to the method with only a timer in which the motor rotor position can not be intuitively acquired due to the count at a high speed being different from that at a slow speed, the current position of the motor is clearly known through the method in the present invention. The present invention can guarantee the normal work of the motor no matter how many HALL have failed, and the present invention is based on the idea of first ensuring the commutation and then detecting the HALL fault.

### BRIEF DESCRIPTION OF THE DRAWINGS

Fig.1 shows a control block diagram of a motor according to a method for fault processing of HALL position sensor in brushless direct current motor in the present invention.
Fig.2 shows a timing effect diagram of a motor operation according to the method for fault processing of HALL position sensor in brushless direct current motor in the present invention.
Fig.3 shows a circuit diagram of a HALL edge detection according to the method for fault processing of HALL position sensor in brushless direct current motor in the present invention.
Fig.4 shows a flow diagram of a HALL detection and a MCU internal degree count increment calculation according to the method for fault processing of HALL position sensor in brushless direct current motor in the present invention.
Fig.5 shows a circuit diagram of converting the HALL edge detection results into rotor position angles according to the method for fault processing of HALL position sensor in brushless direct current motor in the present invention.
Fig.6 shows a schematic diagram of the time of commutation and the time that the MCU internal degree is updated to a HALL hopping according to the method for fault processing of HALL position sensor in brushless direct current motor in the present invention.

### DETAILED DESCRIPTION OF THE PREFERRED EMBODIMENTS

In order to describe the technical content of the present invention more clearly, the following is further described with reference to specific embodiments.

A method for fault processing of HALL position sensor in brushless direct current motor, including the following steps:
step (1) detecting HALL signals by an edge detection, and recording the number of edge hopping ;
step (1.1) detecting the order of the HALL signal changes, and prompting a fault occurs;
step (1.2) determining whether the edge hopping occurs; if the edge hopping occurs, recording the number of the edge hopping in each electrical cycle and continuing with step (1.3); otherwise, if no edge hopping occurs, indicating all three HALL have faults;
step (1.3) recording the number of the edge hopping of round_x+1 after each HALL going through a rising edge and a falling edge, where x represents A, B, and C phase respectively; subtracting round_x from the maximum value of round_a, round_ B and round_c of each edge hopping respectively, and if the result is greater than 1, indicating the HALL has faults; otherwise, indicating no fault occurs;
step (2) determining whether the absolute value of a difference between a rotor position change represented by HALL and an angle value calculated internally by MCU is within a preset error range; if so, updating the angle value to the angle representing the rotor position that is detected by HALL, otherwise, increasing the angle value according to an angle increment previously calculated through a motor rotation speed;
step (3) obtaining an acceptable range based on an original value of the previous angle increment;
step (3.1) obtaining the acceptable range of the angle increment based on the original value of the previous angle increment and an error angle set by a register in a commutation hardware circuit;
step (3.2) determining whether a difference between the angle value calculated internally by MCU and the angle corresponding to HALL is within the acceptable range when the HALL edge hopping occurs; if so, the angle value is updated to the angle corresponding to HALL, otherwise, the angle value is not updated.

In an embodiment, the method further includes a step of commutation, specifically including the following step:
performing the commutation when the angle values calculated internally by MCU are 30°, 90°, 150°, 210°, 270°, or 330°.

In an embodiment, the motor includes an angle recorder to record angles, and a commutation of the motor is performed according to the value of the angle recorder.

According to the invention, the motor includes an error register group including a plurality of error registers, where the outputs of the error registers are all connected to a plurality of AND-OR gates to correspond to different rotor position angles when a commutation occurs respectively.

In a specific embodiment of the present invention, when a rotor position sensor (usually using HALL sensor) is faulty, a control system is required to be able to determine the sensor fault, and even when the fault occurs, a motor is required to not stop or lose control instantly but to maintain the normal operation. For some human-machine scenarios, such as electric vehicles, which have a high requirement for the high comfort of use, vibrating too much is not allowed, and being able to drive for a period of time and reusing after repairing are needed when the HALL fault occurs. Therefore, attention first should be paid to ensure the normal operation of the motor after the HALL fault occurs, and then to the detection of the fault. At the same time, it is also necessary to ensure the acceleration and deceleration of the motor when there is no fault occurrs to the motor, because the acceleration and deceleration of the motor are important factors in determining the fault of the HALL.

However, more attention is paid to fault detection in the currently conventional methods. In addition, a sudden occurrence of three HALL faults is not considered. Therefore, there are still hidden dangers. Although there are some methods using a non-sensing mode when a fault occurs to the HALL, these are only alternatives after the occurrence of the fault, because they cannot work when the fault suddenly occurs to the HALL.

The present invention includes a built-in angle counter, and the angle counter is used for detecting which specific HALL is faulty on the basis of ensuring the normal commutation.

The method of the present invention can realize: establishing the relationship between the next edge hopping and the previous edge hopping , determining there is truly a fault regarding a sudden occurrence of the edge hopping that are far apart, then putting forward an early warning, performing the commutation as usual according to the MCU internal angle value, and explaining the fault occurs to which HALL after the operation of two electrical cycles. For most practical applications, the fault occurs to which HALL is not important. As long as there is one fault occurs to a single HALL, the entire HALL board will be replaced. Therefore, the key lies in the normal operation of the motor after the fault occurs to the HALL. The present invention can also detect the faulty HALL in the case of merely replacing the faulty HALL.

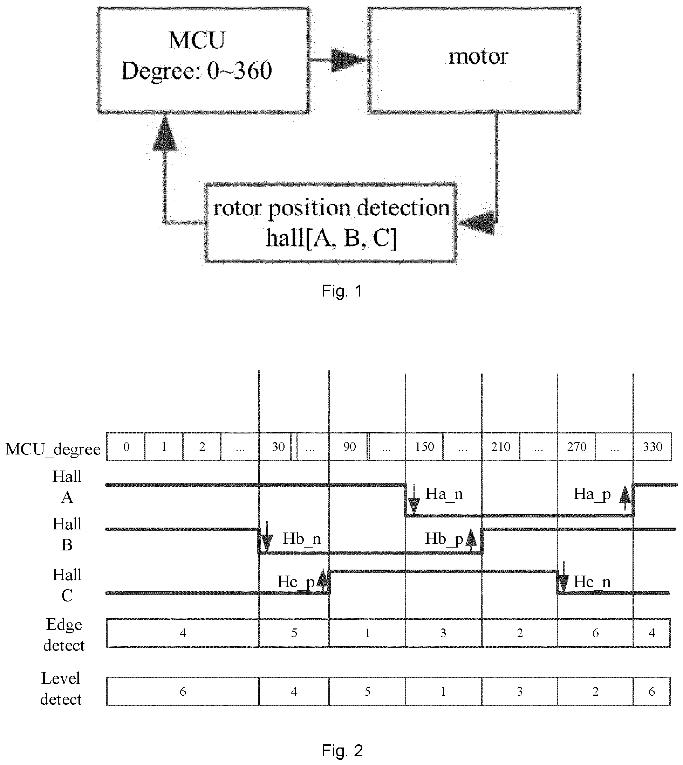

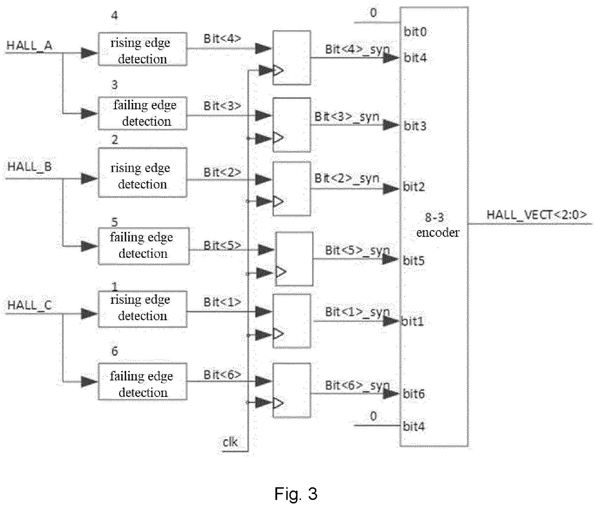

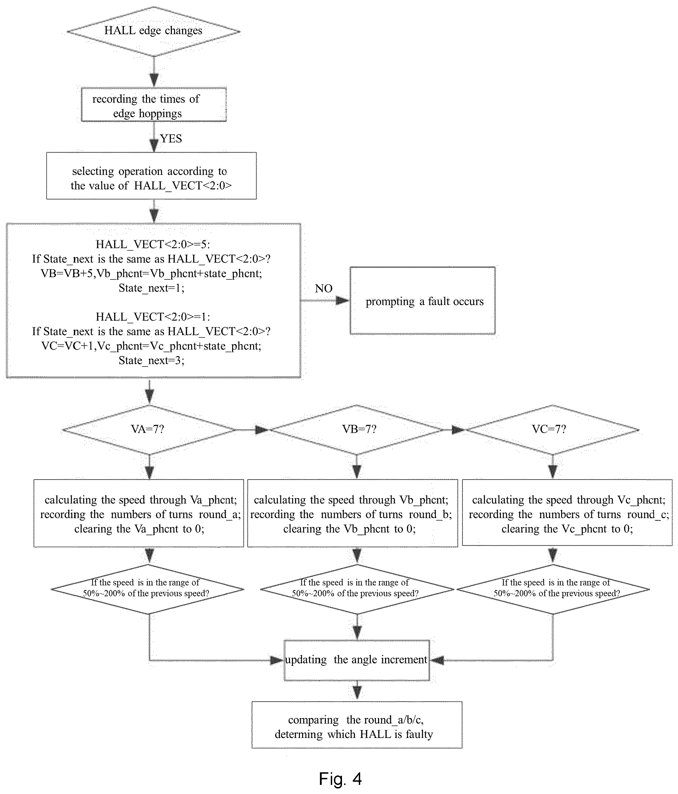

The block diagram of motor control and motor commutation is shown in Fig. 1, first, detecting HALL signals by the edge detection, where HALL<2> represents HALL_A, HALL<1> represents HALL_ B, and HALL<0> represents HALL_C. Updating the current degree value after detecting the position change of the rotor represented by the HALL, the achieved effect is shown in Fig. 2 and the hardware diagram is shown in Fig. 3. Increasing the degree angle automatically when the rotor position represented by HALL is not detected, and adjusting the incremental steps of the degree angle according to the motor speed, then updating the speed every time when the independent HALL signal goes through a rising edge and a falling edge, and the implementation process is shown in Fig. 4.

A HALL fault detection method is as follows:
1. Presetting the forward and reverse rotation of the motor in advance, so whether the sequence of the rotor position in the motor is 546231 or 513264 is also determined in advance. The acceleration and deceleration are interference factors for identifying HALL fault. When the motor works at a constant speed, the HALL position and the degree are shown as Fig. 2.
**2.** Taking the rotor position at HALL<2:0>= 0x5 as an example (edge detection result), the level detection result is 100, and the current angle degree is 30°-90° when there is no fault occurs to the motor. Under normal circumstances, the next edge occurrence result is HALL<2:0>= 0 x1. If it is not 1, it may be 3 or 2 or 4 or 6, and the latter four all indicate that HALL is faulty. At this time, the fault occurs to which HALL can be analyzed certainly. However, the analysis of fault needs to be processed under the conditions of single HALL fault or double HALL fault and the like, which is more complicated and not the most critical in the motor operation. Therefore, only a prompt is given when a problem of HALL signal change order is found.
3. Recording the number of edge hopping in each electrical cycle (equivalent to the degree angle recorded internally by MCU), and if there is no edge hopping, there are faults that occur to all three HALL.
**4.** Determining the HALL is in a normal state if round_x+1 (x represents a, b, and c phase respectively) is recorded after each HALL going through a rising edge and a falling edge. Selecting the maximum value of the round_a, the round_b, and the round_c every time there is an edge hopping, subtracting the round_x (x includes a, b, c) from the maximum value of the round_a, the round_b, and the round_c respectively, and if the result is greater than 1, indicating the HALL has faults. The above operation is simple.

The angle increment calculation process is as follows:
Whether the angle increment can be updated in time affects the error of the results of the angle calculated internally by MCU and the external HALL detection results. If the corresponded update is accomplished immediately whenever the HALL edge changes, a false update due to faults may occur. Therefore, an acceptable range should be given based on the original value of the previous degree increment, and the acceptable range is set according to the error angle of the register in the commutation hardware circuit. If the error is 20°, the acceptable increment range is from original increment * 0.75 to 1.5 * original increment.

Assuming that the acceptable range of the angle increment is 1.5 times of the original increment, and if the angle increment calculated according to the HALL edge hopping is 1.5 times of the original increment, indicating the acceleration or fault may occur. Within the acceptable range, the angle degree calculated internally by MCU under the condition of 1.5 times of the original increment reaches the commutation point 20° ahead of that under the condition of the original increment (when the HALL fault occurs instead of the acceleration). If there is no hopping occurs to the HALL when the angle degree has reached the commutation point (for example, 90°), then when a hopping occurs to the HALL, the angle degree would have reached 110° according to the original speed increment, and if the difference between the angle degree and the degree corresponding to the HALL is within 20° at this time, then the angle degree calculated internally by MCU can be updated to the degree corresponding to the HALL, otherwise, the angle degree cannot be updated. If the acceleration occurs, there necessarily will be a hopping occurs to the HALL before 110°. Meanwhile, the angle degree can also be updated to the angle corresponding to the HALL.

The commutation method is as follows:
performing commutation when the degree angles calculated internally by MCU are 30°, 90°, 150°, 210°, 270°, or 330°, which are also referred to as the commutation points. If the external HALL is out of phase, the internal degree will continue to count without affecting the commutation to ensure the normal operation of the motor and avoid sudden abnormal commutation.

Since the acceleration and the deceleration will cause errors between the rotor position detected by the HALL and the Degree calculated internally by MCU, the error register is provided in the present invention. According to the invention, the configuration range is within 0 to 60°, and the conventional application configuration is 20°. When the absolute value of the difference between the rotor position angle corresponding to the HALL and the Degree calculated internally by MCU is less than 20°, the Degree is updated to the HALL detection result, and vice versa.

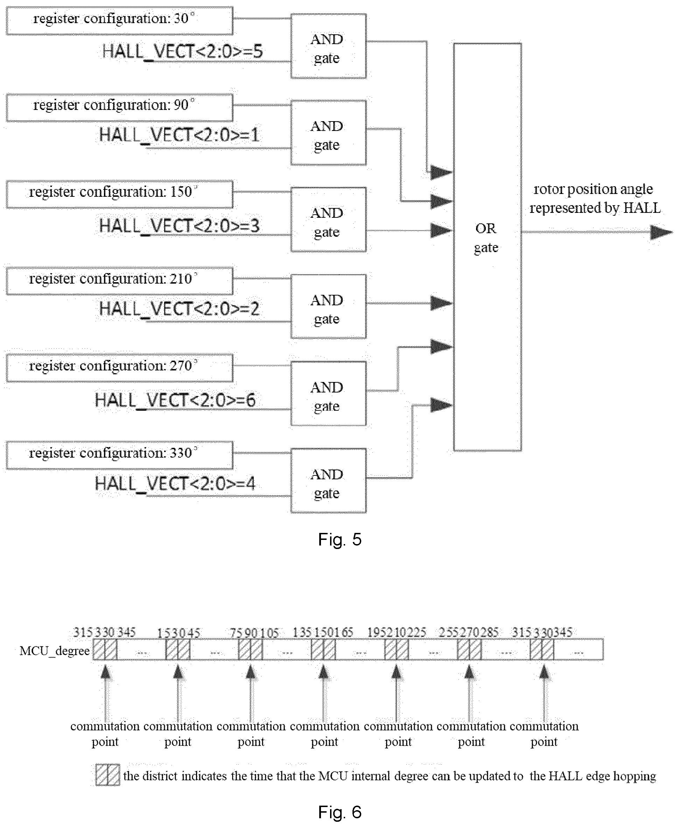

The commutation point and the time that the MCU is updated to the HALL are shown in Fig. 6.

The method for determining in the present invention does not consider whether HALL has failed. The method first determines whether there is a HALL fault through the order which meets the 513264 or 546231 inevitability; secondly determines which HALL has failed by comparing the number of hopping of each HALL and selecting the HALL with a higher number of hopping, because the number of hopping of the faulty HALL will not increase. The commutation is also continuous and is not affected by HALL fault.

The angle recorder is provided in the circuit to maintain the synchronization of the angle value and the HALL, thus realizing the commutation of the motor based on the value of the angle recorder and ensuring the normal work of the motor in the event of a three-HALL fault.

The present invention determines whether update the angle value calculated internally by MCU to the HALL edge hopping value and controls the update of the angle increment, by comparing the difference between the angle value and the rotor position represented by the HALL edge hopping with the acceptable difference range preset by the register.

The method for fault processing of HALL position sensor in brushless direct current motor in the present invention is a method based on hardware detection, in which the repetitive detection work can be completed by the hardware, and the timely commutation can be ensured for the motor control users. The present invention provides the internal degree to record the angle, and the motor commutation is accomplished according to the degree angle value recorded by the internal degree. Therefore, compared to the method with only a timer in which the motor rotor position can not be intuitively acquired due to the count at a high speed being different from that at a slow speed, the current position of the motor is clearly known. The present invention can guarantee the normal work of the motor no matter how many HALL have failed, and the present invention is based on the idea of first ensuring the commutation and then detecting the HALL fault.

In this specification, the present invention has been described with reference to its specific embodiments. However, it is obvious that various modifications and changes can still be made. Therefore, the specification and drawings should be considered illustrative and not restrictive.

## Claims

1. A method for fault processing of HALL position sensor in brushless direct current motor, comprising:
step (1) presetting the forward and reverse rotation of the motor in advance, detecting HALL signals by an edge detection, and recording the number of edge hopping;
step (2) determining whether the absolute value of a difference between a rotor position change represented by HALL and an angle value calculated by MCU is within a preset error range; if so, updating the MCU internal angle value to the angle representing the rotor position that is detected by HALL, otherwise, increasing the angle value calculated by MCU according to an angle increment previously calculated through a motor rotation speed;
step (3) obtaining an acceptable range based on an original value of the previous angle increment;
wherein the motor comprises an error register group comprising a plurality of error registers, wherein the outputs of the error registers are all connected to a plurality of AND-OR gates to correspond to different rotor position angles when a commutation occurs respectively;
wherein the configuration range of the error registers is within 0° to 60°.

2. The method for fault processing of HALL position sensor in brushless direct current motor according to claim 1, wherein the step (1) comprises the following:
step (1.1) detecting the order of HALL signal changes, and prompting a fault occurs;
step (1.2) determining whether the edge hopping occurs; if the edge hopping occurs, recording the number of the edge hopping in each electrical cycle and continuing with step (1.3); otherwise, if no edge hopping occurs, indicating all three HALL have faults;
step (1.3) recording the number of the edge hopping of round_x+1 after each HALL going through a rising edge and a falling edge, where x represents A, B, and C phase respectively; subtracting round_x from the maximum value of round_a, round_ B, and round_c of each edge hopping respectively, and if the result is greater than 1, indicating the HALL has faults; otherwise, indicating no fault occurs.

3. The method for fault processing of HALL position sensor in brushless direct current motor according to claim 1, wherein the step (3) comprises the following:
step (3.1) providing the acceptable range of the angle increment based on the original value of the previous angle increment and an error angle set by a register in a commutation hardware circuit;
step (3.2) determining whether a difference between the angle value calculated by MCU and the angle corresponding to HALL is within the acceptable range when the HALL edge hopping occurs; if so, the angle value calculated by MCU is updated to the angle corresponding to HALL, otherwise, the angle value calculated by MCU is not updated.

4. The method for fault processing of HALL position sensor in brushless direct current motor according to claim 1, wherein the method further comprises a step of commutation, comprising:
performing the commutation when the angle values calculated internally by MCU are 30°, 90°, 150°, 210°, 270°, or 330°.

5. The method for fault processing of HALL position sensor in brushless direct current motor according to claim 1, wherein the motor comprises an angle recorder to record the angle, and a commutation of the motor is performed according to the value of the angle recorder.

6. The method for fault processing of HALL position sensor in brushless direct current motor according to claim 1, wherein the configuration of the error registers is 20°.

7. The method for fault processing of HALL position sensor in brushless direct current motor according to claim 6, wherein if the absolute value of the difference between the rotor position change represented by HALL and the angle value calculated by MCU is within 20°, then the MCU internal angle value is updated to the angle representing the rotor position that is detected by HALL.

8. The method for fault processing of HALL position sensor in brushless direct current motor according to claim 6, wherein the acceptable range is from original value of the previous angle increment * 0.75 to 1.5 * original value of the previous angle increment.

## Patentansprüche

1. Verfahren zum Verarbeiten von Fehlern eines HALL-Positionssensors in einem bürstenlosen Gleichstrom-Motor, umfassend:
Schritt (1) des Voreinstellens der Vorwärts- und Rückwärtsdrehung des Motors im Voraus, des Erfassens von HALL-Signalen durch eine Flankenerfassung und des Aufzeichnens der Anzahl von Flankensprüngen;
Schritt (2) des Bestimmens, ob der Absolutwert einer Differenz zwischen einer durch HALL dargestellten Rotorpositionsänderung und einem durch MCU berechneten Winkelwert innerhalb eines voreingestellten Fehlerbereichs liegt; wenn dem so ist, Aktualisieren des MCU-internen Winkelwerts auf den Winkel, der die durch HALL erfasste Rotorposition darstellt, andernfalls Erhöhen des durch MCU berechneten Winkelwerts gemäß einem zuvor durch eine Motordrehgeschwindigkeit berechneten Winkelinkrement;
Schritt (3) des Erhaltens eines akzeptablen Bereichs auf der Basis eines Originalwerts des vorherigen Winkelinkrements;
wobei der Motor eine Fehlerregistergruppe umfasst, die eine Vielzahl von Fehlerregistern umfasst, wobei die Ausgänge der Fehlerregister alle mit einer Vielzahl von UND-ODER-Gattern verbunden sind, um unterschiedlichen Rotorpositionswinkeln zu entsprechen, wenn jeweils eine Kommutierung auftritt;
wobei der Konfigurationsbereich der Fehlerregister innerhalb von 0° bis 60° liegt.

2. Verfahren zum Verarbeiten von Fehlern eines HALL-Positionssensors in einem bürstenlosen Gleichstrom-Motor nach Anspruch 1, wobei der Schritt (1) Folgendes umfasst:
Schritt (1.1) des Erfassens der Reihenfolge von HALL-Signaländerungen und des Veranlassens, dass ein Fehler auftritt;
Schritt (1.2) des Bestimmens, ob das Flankensprung auftritt; wenn das Flankensprung auftritt, des Aufzeichnens der Anzahl des Flankensprungs in jedem elektrischen Zyklus und des Fortsetzens mit Schritt (1.3); andernfalls, wenn kein Flankensprung auftritt, des Anzeigens, dass alle drei HALL Fehler aufweisen;
Schritt (1.3) des Aufzeichnens der Anzahl des Flankensprungs von round_x+1, nachdem jeder HALL eine ansteigende Flanke und eine abfallende Flanke durchlaufen hat, wobei x die A-, B- bzw. C-Phase repräsentiert; des Subtrahierens von round_x von dem Maximalwert von round_a, round_b bzw. round_c jedes Flankensprungs, und wenn das Ergebnis größer als 1 ist, des Anzeigens, dass der HALL Fehler aufweist; andernfalls des Anzeigens, dass kein Fehler auftritt.

3. Verfahren zum Verarbeiten von Fehlern eines HALL-Positionssensors in einem bürstenlosen Gleichstrom-Motor nach Anspruch 1, wobei der Schritt (3) Folgendes umfasst:
Schritt (3.1) des Bereitstellens des akzeptablen Bereichs des Winkelinkrements auf der Basis des Originalwerts des vorherigen Winkelinkrements und eines durch ein Register in einer Kommutierungs-Hardwareschaltung gesetzten Fehlerwinkels;
Schritt (3.2) des Bestimmens, ob eine Differenz zwischen dem durch MCU berechneten Winkelwert und dem Winkel, der HALL entspricht, innerhalb des akzeptablen Bereichs liegt, wenn das HALL-Flankensprung auftritt; wenn dem so ist, wird der durch MCU berechnete Winkelwert auf den Winkel aktualisiert, der HALL entspricht, andernfalls wird der durch MCU berechnete Winkelwert nicht aktualisiert.

4. Verfahren zum Verarbeiten von Fehlern eines HALL-Positionssensors in einem bürstenlosen Gleichstrom-Motor nach Anspruch 1, wobei das Verfahren ferner einen Schritt der Kommutierung umfasst, umfassend:
Durchführen der Kommutierung, wenn die intern durch MCU berechneten Winkelwerte 30°, 90°, 150°, 210°, 270° oder 330° betragen.

5. Verfahren zum Verarbeiten von Fehlern eines HALL-Positionssensors in einem bürstenlosen Gleichstrom-Motor nach Anspruch 1, wobei der Motor einen Winkelrekorder zum Aufzeichnen des Winkels umfasst und eine Kommutierung des Motors gemäß dem Wert des Winkelrekorders durchgeführt wird.

6. Verfahren zum Verarbeiten von Fehlern eines HALL-Positionssensors in einem bürstenlosen Gleichstrom-Motor nach Anspruch 1, wobei die Konfiguration der Fehlerregister 20° beträgt.

7. Verfahren zum Verarbeiten von Fehlern eines HALL-Positionssensors in einem bürstenlosen Gleichstrom-Motor nach Anspruch 6, wobei, wenn der Absolutwert der Differenz zwischen der durch HALL dargestellten Rotorpositionsänderung und dem durch MCU berechneten Winkelwert innerhalb von 20° liegt, der MCU-interne Winkelwert auf den Winkel aktualisiert wird, der die durch HALL erfasste Rotorposition darstellt.

8. Verfahren zum Verarbeiten von Fehlern eines HALL-Positionssensors in einem bürstenlosen Gleichstrom-Motor nach Anspruch 6, wobei der akzeptable Bereich vom Originalwert des vorherigen Winkelinkrements * 0,75 bis 1,5 * Originalwert des vorherigen Winkelinkrements reicht.

## Revendications

1. Procédé pour traiter les défauts d'un capteur de position à effet Hall dans un moteur à courant continu sans brosse, comprenant les étapes consistant à :
étape (1) prérégler à l'avance la rotation vers l'avant et vers l'arrière du moteur, détecter des signaux à effet Hall par une détection de flanc, et enregistrer le nombre de sauts de flanc ;
étape (2) déterminer si la valeur absolue d'une différence entre un changement de position de rotor représenté par l'effet Hall et une valeur d'angle calculée par l'unité MCU se situe dans une plage d'erreur préréglée ; si tel est le cas, mettre à jour la valeur d'angle interne de l'unité MCU à l'angle représentant la position de rotor qui est détectée par l'effet Hall, sinon, augmenter la valeur d'angle calculée par l'unité MCU en fonction d'un incrément d'angle précédemment calculé par le biais d'une vitesse de rotation de moteur;
étape (3) obtenir une plage acceptable sur la base d'une valeur d'origine de l'incrément d'angle précédent ;
dans lequel le moteur comprend un groupe de registres d'erreurs comprenant une pluralité de registres d'erreurs, dans lequel les sorties des registres d'erreurs sont toutes connectées à une pluralité de grilles ET-OU pour correspondre à différents angles de position de rotor lorsqu'une commutation se produit respectivement ;
dans lequel la plage de configuration des registres d'erreurs se situe dans la plage de 0° à 60°.

2. Procédé pour traiter les défauts d'un capteur de position à effet Hall dans un moteur à courant continu sans brosse selon la revendication 1, dans lequel l'étape (1) comprend les étapes suivantes :
étape (1.1) détecter l'ordre de changements de signaux à effet Hall, et inciter un défaut à se produire ;
étape (1.2) déterminer si le saut de flanc se produit ; si le saut de flanc se produit, enregistrer le nombre de sauts de flanc dans chaque cycle électrique et continuer avec l'étape (1.3) ; sinon, si aucun saut de flanc ne se produit, indiquer que les trois éléments à effet Hall présentent des défauts ;
étape (1.3) enregistrer le nombre de sauts de flanc de round_x+1 après que chaque élément à effet Hall a traversé un flanc montant et un flanc descendant, où x représente respectivement les phases A, B et C ; soustraire round_x de la valeur maximale de round_a, round_B et round_c de chaque saut de flanc respectivement, et si le résultat est supérieur à 1, indiquer que l'élément à effet Hall présente des défauts ; sinon, indiquer qu'aucun défaut ne se produit.

3. Procédé pour traiter les défauts d'un capteur de position à effet Hall dans un moteur à courant continu sans brosse selon la revendication 1, dans lequel l'étape (3) comprend les étapes suivantes :
étape (3.1) fournir la plage acceptable de l'incrément d'angle sur la base de la valeur d'origine de l'incrément d'angle précédent et d'un angle d'erreur réglé par un registre dans un circuit matériel de commutation ;
étape (3.2) déterminer si une différence entre la valeur d'angle calculée par l'unité MCU et l'angle correspondant à l'élément à effet Hall se situe dans la plage acceptable lorsque le saut de flanc à effet Hall se produit ; si tel est le cas, la valeur d'angle calculée par l'unité MCU est mise à jour à l'angle correspondant à l'élément à effet Hall, sinon, la valeur d'angle calculée par l'unité MCU n'est pas mise à jour.

4. Procédé pour traiter les défauts d'un capteur de position à effet Hall dans un moteur à courant continu sans brosse selon la revendication 1, dans lequel le procédé comprend en outre une étape de commutation, comprenant les étapes consistant à :
exécuter la commutation lorsque les valeurs d'angle calculées en interne par l'unité MCU sont de 30°, 90°, 150°, 210°, 270° ou 330°.

5. Procédé pour traiter les défauts d'un capteur de position à effet Hall dans un moteur à courant continu sans brosse selon la revendication 1, dans lequel le moteur comprend un enregistreur d'angle pour enregistrer l'angle, et une commutation du moteur est exécutée en fonction de la valeur de l'enregistreur d'angle.

6. Procédé pour traiter les défauts d'un capteur de position à effet Hall dans un moteur à courant continu sans brosse selon la revendication 1, dans lequel la configuration des registres d'erreurs est de 20°.

7. Procédé pour traiter les défauts d'un capteur de position à effet Hall dans un moteur à courant continu sans brosse selon la revendication 6, dans lequel si la valeur absolue de la différence entre le changement de position de rotor représenté par l'effet Hall et la valeur d'angle calculée par l'unité MCU se situe dans la plage de 20°, alors la valeur d'angle interne de l'unité MCU est mise à jour à l'angle représentant la position de rotor qui est détectée par l'effet Hall.

8. Procédé pour traiter les défauts d'un capteur de position à effet Hall dans un moteur à courant continu sans brosse selon la revendication 6, dans lequel la plage acceptable va de la valeur d'origine de l'incrément d'angle précédent * 0,75 à 1,5 * valeur d'origine de l'incrément d'angle précédent.
